# EUROPEAN PATENT SPECIFICATION

(11) **EP 2 915 729 B1**
(45) Date of publication and mention of the grant of the patent: **15.08.2018**
(21) Application number: 14158362.5
(22) Date of filing: 07.03.2014
(51) Int. Cl.: B62J 15/00, B62J 17/00, B62J 27/00, B62K 11/04

(54) **Straddle-type vehicle**
Grätschsitzfahrzeug
Véhicule de type à enfourcher

(43) Date of publication of application: 09.09.2015
(73) Proprietor: Yamaha Hatsudoki Kabushiki Kaisha, Iwata-shi, Shizuoka 438-8501 (JP)
(72) Inventor: Pozzi, William, 20050 Gerno di lesmo (MI) (IT)
(74) Representative: Grünecker Patent- und Rechtsanwälte PartG mbB

(56) References cited:
- EP-A1- 2 039 600
- EP-A1- 2 447 138
- EP-A1- 2 703 265
- EP-A2- 1 081 036
- EP-A2- 2 281 737
- JP-A- H01 111 583
- JP-A- 2009 078 795
- JP-A- 2010 058 730
- US-A1- 2007 023 216

## Description

The present invention relates to a straddle type vehicle comprising a body frame comprising a left pipe section and a right pipe section; a seat comprising a bottom plate and a cushion element provided on the bottom plate, wherein the seat overlaps at least a portion of the left pipe section and at least a portion of the right pipe section in plan view; a power unit/engine rigidly fixed to the body frame such that the power unit/engine cannot rotate with respect to the body frame; and at least one electrical component.

Such straddle type vehicles, i.e. motorcycles or quads comprise a tubular frame with left and right pipe sections. Straddle type vehicles with tubular frames have commonly engines with small displacements between 50 and 250 cc. Tubular frames tend to be less stiff as compared to box frames for large motorcycles. However, in terms of cost conservations and regarding the forces acting on the frame due to the torque of the engine and the driving forces, they provide sufficient rigidity for such straddle type vehicles.

Generally, straddle type vehicles have at least one, mostly many electrical components. Some of the electrical components are often disposed in the space located below the seat and have to be fixed to the body frame or to a member which is secured to the body frame. They may be attached to the fuel tank or on a plate as a stay member, which is fixed to the body frame by welding. Such configuration is known from WO 2012-029687 A1. Additionally, US 2007/023216 A1 shows the preamble of claim 1. Since a straddle type vehicle often has a certain number of electrical components, the number of stays to be provided and to be welded to the body frame increases accordingly. The increase in the number of stays therefore leads to an increase in assembling steps, which would require a number of precise welding steps which have to be accomplished individually, and therefore needs more time and generates additional costs.

The object of the present invention is to solve the above-mentioned problem and to provide a straddle type vehicle which has a structure that enables a reduction of the assembly process of the electrical components and to simplify this process, thereby reducing time and cost for assembling the straddle type vehicle.

According to the present invention, which is defined by the features of claim 1, the object is solved by a straddle type vehicle of the aforementioned kind wherein the straddle type vehicle further comprises a resin support member connecting the left pipe section and the right pipe section; the seat overlaps at least a portion of the resin support member in plan view; and the at least one electrical component is supported on the resin support member. Preferred embodiments are claimed by the dependent claims.

By providing a resin support member for supporting the electrical components, it is possible to omit the welding step of plurality of stays for each electrical component. The resin support member thereby is an integrated one big member, namely a stay, which may have a plurality of stay portions for each electrical component. Furthermore, since this resin support member expands between the left pipe section and the right pipe section, it increases the stiffness of the tubular frame. The resin support member being made of resin therefore allowing for various shapes and may accommodate multiple electrical components in a space-saving manner. At the same time, it can be shaped in a manner as to increase the stiffness in order to act as a load carrying element for the frame in particular for motorcycles with a small displacement. The possibility of a space-saving mounting of the electrical component enables to maintain a comfortable seat height and to ensure sufficient movement space for the rear wheel.

Preferably, in such straddle-type vehicle, the resin support member comprises at least one supporting portion that overlaps the left pipe section and the right pipe section in plan view, and contacts with the left pipe section and the right pipe section. Since the at least the edge portion of the resin support member expands above or underneath of the left and right pipe section, the resin support member gains even more support strength and can be fixed to the left and right pipe section in a stable manner.

Preferably, in such straddle-type vehicle, at least a portion of the at least one electrical component overlaps the left pipe section and/or the right pipe section in side view. The resin support member has such a construction that enables the electrical portion to be supported also in a area that overlaps the right and left pipe section in side view. This configuration enables an effective storage of electrical components and the space can be used in a practical manner. In such straddle-type vehicle, the resin support member comprises at least one opening portion provided between the left pipe section and the right pipe section. By providing the opening to the resin support member, the selectivity of the positioning of the electrical components is enhanced essentially. For example, an electrical component may be disposed thereon so as to pass through the opening. In addition, it becomes also possible to provide cables through this opening for the electrical connection of the electrical components with the component provided below the resin support member.

Further in such straddle-type vehicle, the at least one electrical component overlaps the opening portion when seen in plan view.

Preferably, in such straddle-type vehicle, at least one electrical component may be attached directly to the resin support member. By directly attaching the electrical component, it is possible to further reduce the assembling process.

Preferably, in such straddle-type vehicle, the resin support member comprises at least one first fixing portion configured to fix the resin support member to the body frame, preferably to the left pipe section and/or to the right pipe section. Using the first fixing member, the resin support member can be fixed to the body frame, preferably to the left and right pipe section, in a stable manner. The resin support member may act as a structural, load carrying element for the frame.

Preferably, in such straddle-type vehicle, the resin support member further comprises at least one supporting portion positioned at a distance from the at least one first fixing portion in the longitudinal direction of the vehicle.

Further preferably, in such straddle-type vehicle, the at least one supporting portion is configured to support the resin support member on the body frame, preferably on the left pipe section and/or on the right pipe section.

In other words, the resin support member extends in a longitudinal direction, thus being able to absorb forces acting in a longitudinal direction on the frame. Further preferably, the resin support member is configured to extend from the pillion rider seat portion to the main seat portion.

Preferably, in such straddle-type vehicle, at least a portion of the at least one electrical component is positioned above an upper edge of the resin support member when seen in a side view.

Further preferably, in such straddle-type vehicle, at least a portion of the at least one electrical component is positioned below a lower edge of the resin support member when seen in a side view. By configuring the resin support member to be adopted to support the electrical components also in a manner wherein at least one electrical component is positioned above and/or below the resin support member seen from the side view, the possible ways of installing the electrical components are enhanced by far and allows a very compact manner.

Furthermore, the resin support member thereby may be configured to have patterned indented surface with concave and for convex portions, which enhances the stiffness of the resin support member significantly.

Preferably, in such straddle-type vehicle, the resin of the resin support member is a thermosetting resin, preferably PVC (Polyvinylchloride).

The straddle-type vehicle may further comprising a resin body cover, wherein the resin of the resin body cover is preferably of a different material to the resin of the resin support member. It is preferably made from a thermoplastic resin, preferably PA (Polyamid).

By choosing different material for the resin support member and the resin body cover respectively, it is possible to assign different characteristic feature to each which might complement mutually. For example, the resin of the resin support member might be chosen with regard to its stiffness, and cost of the material, whereas the resin of the body frame might be chosen in regard with the esthetical and light weight property. Preferably, the material of the resin support member exceeds the stiffness of the resin of the body frame by at least two times. As a preferred range for the stiffness of resin support member is suggested at about 100 - 120 N/mm² bending strength. For the resin of the resin cover body Polyamid 6 or Polyamid 66 with a bending strength of 22 - 50 N/mm², respectively is suggested.

Preferably, in such straddle-type vehicle, the resin support member comprises at least one second fixing portion configured to fix the resin support member to the resin body cover. By configuring the resin support member adopted to be fixed also to the resin body cover in addition to the body frame, the whole structure obtains improved stiffness and stability.

Preferably, in such straddle-type vehicle, the resin support member and the resin body cover are configured so as to form a grip portion for a pillion passenger, and for a damper member is preferably provided between the resin support member and the resin body cover. By configuring the grip portion for a pillion passenger with the resin support member and the resin body cover together, the grip portion is provided with enhanced rigidity and allows for a smooth design. A damper member provided between the resin support member and the resin body cover buffers the vibration which occurs there between, such that the pillion passenger holding on to the grip portion does not feel the vibrations of the engine.

Hereinafter, the present invention is illustrated and explained by means of a preferred embodiment in conjunction with the accompanying drawings.

The drawings wherein:
- Figure 1: is a first side view of the motorcycle (straddle-type vehicle), especially the view of the left side of the vehicle of an preferred embodiment;
- Figure 2: is an explosive view of the resin support member and partially the left and right pipe section of the tubular frame of the preferred embodiment;
- Figure 3: is a vertical cross-section of the seat, the resin support member and the frame depicted in Figure 1, taken along the line A-A in Figure 1;
- Figure 4: is a plan view of the resin support member of the preferred embodiment; and
- Figure 5: is a plan view of the resin support member of the preferred embodiment mounted to the body frame.

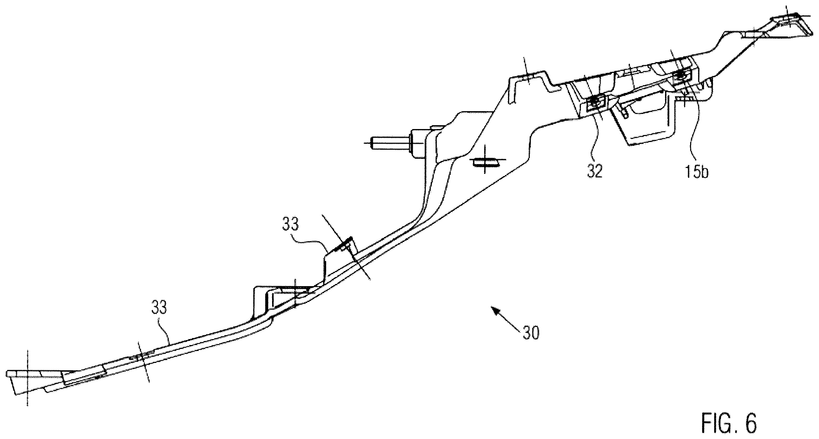

- Figure 6: is a left section view of the resin support member of the preferred embodiment, and

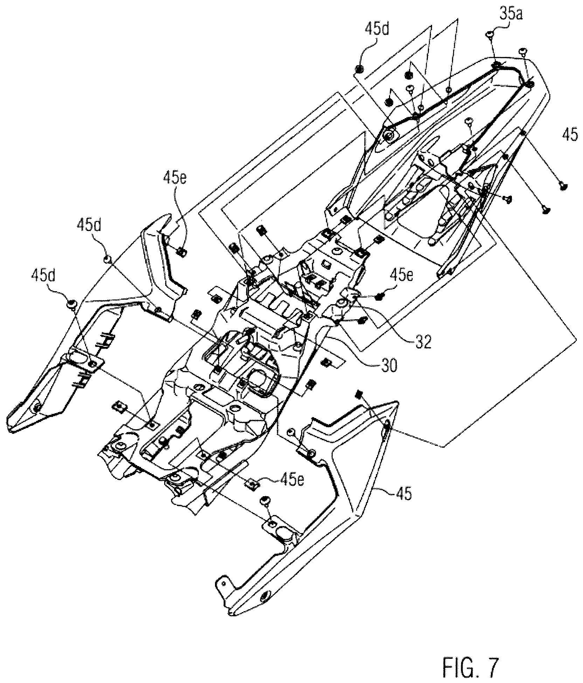

- Figure 7: is an explosive view of the resin support member and the resin body cover of the preferred embodiment.

A preferred embodiment of the present invention will be described below with reference to the accompanying drawings.

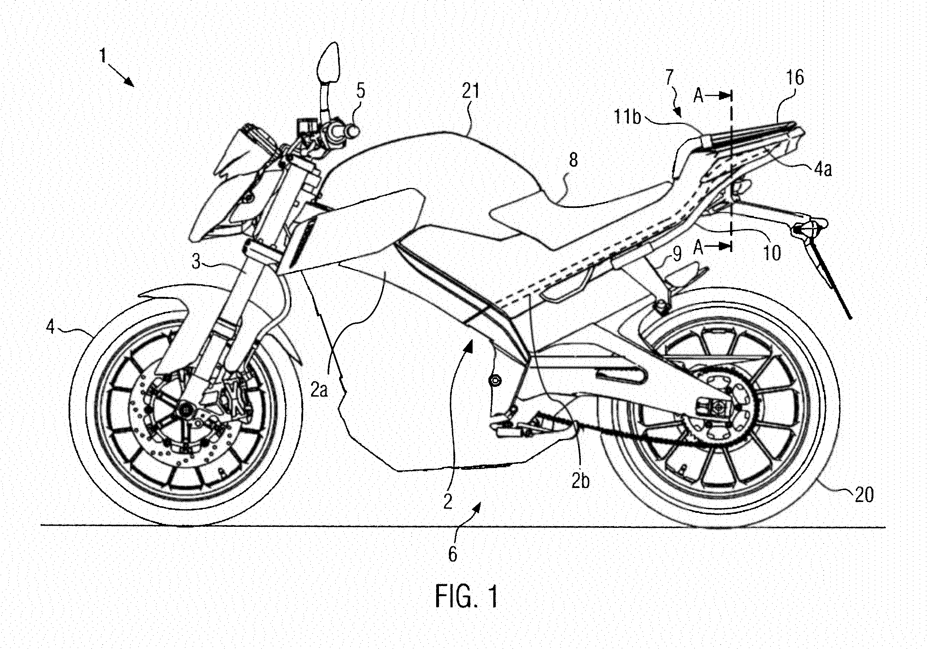

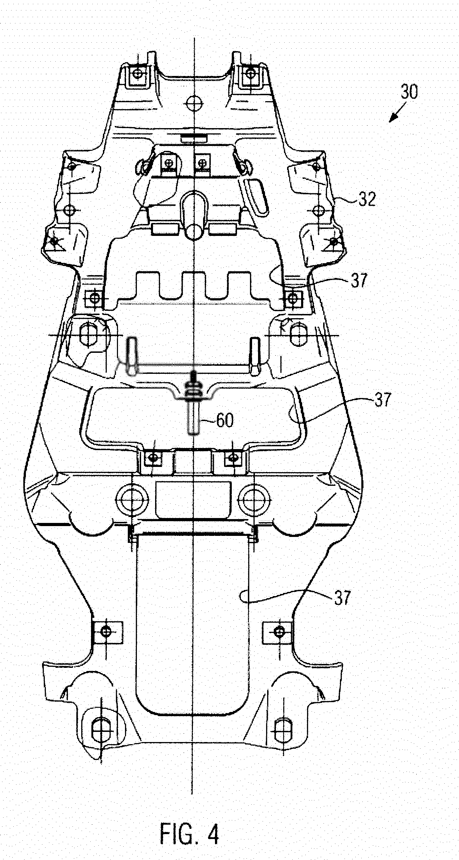

Figures 1 to 5 illustrate a straddle-type vehicle according to a preferred embodiment of the present invention. Therein, in general, a straddle-type vehicle is a motorcycle having a body frame 2 and a seat 7 having a seat main portion 8 on which a rider can be seated straddling the body frame 2 when being seated. Unless otherwise specified, the directional terms "right", "left", "front", "forward", "rear", "backward", "up" and "down" used in this embodiment refer to the right, left, front, forward, rear, backward, up and down directions when viewed by a rider seated on the seat.

In these Figures, a reference numeral 1 designates a motorcycle. The motorcycle 1 has: a body frame 2; a front fork 3, which is supported steerably to the left and right by a head pipe (not shown) located at a front end of the body frame 2, and which places a front wheel 4 and a steering handlebar 5 at a bottom end and a top end of the front fork 3, respectively; a power unit 6, comprising an engine and a gear box, and which is mounted to the body frame 2 at its middle part in the front-rear direction; a trailing suspension arm 19 swingably connected to the body frame 2; a rear wheel 20 is provided at a rear end of the trailing suspension arm 19; and a seat 7 comprising a seat main portion 8 for a rider mounted to the body frame 2 above the power unit 6.

The body frame 2 is provided with: a front frame 2a, having left and right front frame sections extending from the head pipe obliquely downwards to the rear; and a rear frame 2b having left and right rear frame sections extending from the left and right front frame sections obliquely upwards below the seat 7 to the rear. The rear frame 2b further includes the left pipe section 12 and right pipe section 13.

From Figure 1, it can be seen that the power unit 6 is located in an area located between and below the left and right front frame sections. A fuel tank 21 is provided above the front frame 2a and above the power unit 6. The fuel tank 21 is located between the seat 7 and the head pipe supporting the front fork 3.

The seat 7 is a straddle type seat comprising a cushion element 7a provided on a bottom plate 7b. Although not depicted within the Figures, the bottom plate is supported by the body frame. The bottom plate may be directly or indirectly supported by the body frame. The cushion element is configured such that a rider and a pillion passenger may comfortably straddle the seat.

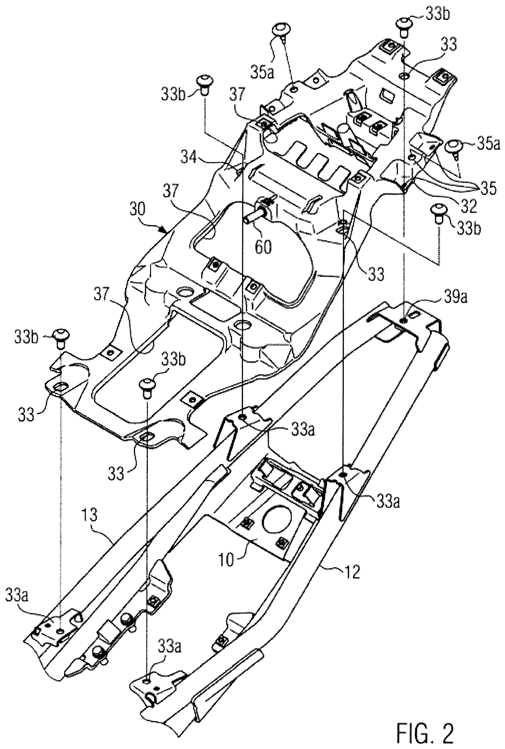

As can be seen from Figures 1 and 2, the seat 7 is divided into 2 portions: a seat main portion 8 for the rider; and a secondary seat portion 16 for the pillion passenger. In an alternative configuration of the present invention, the seat 7 may solely comprise the seat main portion 8.

In the present embodiment, the secondary seat portion 16 is located at a position further rearward and higher than the seat main portion 8. The secondary seat portion 16 is also narrower than the seat main portion 8 in a vehicle widthwise direction. In an alternative configuration of the present invention, the secondary seat portion 16 may be located at the same height as, or even lower than, the seat main portion 8. The secondary seat portion 16 may also be was wide as, or even wider than, the seat main portion 8 in a vehicle widthwise direction. The front fork 22 is supported at the vehicle frame 10 by means of a head type 24. The power unit 6 is fixed to the front frame 1a in at least two positions separated from each other at the body frame. Accordingly, the power unit cannot rotate with respect to the front frame 2a and the rear frame 2b, respectively as it is common for motorcycles.

According to the embodiment shown in Figure 2 to 4, under the bottom plate 7b of the seat 7 there is provided a resin support member 30 so as to connect the left and right pipe sections 12, 13 of the rear body frame 2b with supporting portions 31 provided to the resin support member 30. According to the preferred embodiment, the resin support member 30 is provided so as to extend beyond the left and right pipe sections and secured thereon from above at its left and right edge portion. In other words, the supporting portions 31 provided to the resin support member 30 overlap the left and right pipe sections in plan view and contact with the left and right pipe sections. Since the resin support member 30 is supposed to carry a plurality of electrical components 50 as will be described below, the resin support member must be provided with enough rigidity to support all those electrical components. Furthermore, the movement space for the rear wheel has to be also secured. According to the preferred embodiment, the resin support member 30 is equipped with enough support strength for carrying the plurality of the electrical components 50 by extending it to be secured onto the left and right pipe sections 12, 13 and to be supported by those pipe sections 12, 13, on the rear body frame. The specific embodiment comprises five first fixing portions 33 which are each connected to support brackets 33a welded to the left and right pipe sections by screws 33b.

On each of the left and right edge portion of the resin support member 30, there are provided plurality of first fixing portions 33 along the longitudinal direction for fixing the resin support member onto the left and right pipe sections 12, 13 of the rear body frame 2b. In the preferred embodiment there are five first fixing portions which are fixed to metal brackets 33a, welded to the left and right pipe sections respectively, by screws 33b. Due to the fact of providing multiple fixing points between the left and right pipe sections and the resin support member the rigidity of the frame of the straddle type vehicle is improved significantly. The resin support member 30 can act as a load carrying item of the body frame and can absorb forces in the longitudinal direction as well as in the left-right direction. Furthermore, in a preferable embodiment, at least one of the supporting portions 31 is provided at a distance from the at least one of the first fixing portions 33.

The load carrying ability of the resin support member is furthermore increased by the shape of the resin support member being essentially plate like shaped with a pattern of convex and concave portion in the longitudinal as well as left-right direction. Thereby the stiffness of the resin support member is greatly improved. The preferred embodiment comprises four support portions of which two are provided on each side of the frame at a distance to each other. The support portions 31 are also located in the vicinity to the first fixing portions 33. They are furthermore provided between the first fixing portions 33 when seen in a top view. The support portions 31 also provide defined resting points of the resin support member 30 on the frame. This may also allow for a certain degree of flexibility to firmly attach the resin support member30 on the frame in order to avoid the generation of noise when operating the vehicle.

The resin support member 30 according to the further preferred embodiment extends so as to cover the area underneath of the seat main portion 8 and of the secondary seat portion 16, i.e. pillion seat. Alternatively, the resin support member 30 may be configured to cover those areas only partially. For example, the resin support member 30 may be provided only under the main seat portion 8 or only under the pillion seat 16. However, in the preferred embodiment the length of the resin support member is at least twice the with of the resin support member. Such an essentially rectangular shape allows to integrate many electrical components and to provide a load carrying function of the resin support member to increase the rigidity of the body frame.

In a preferred embodiment, one or plurality of electrical components 50 are mounted onto the resin support member 30. The electrical components are for example switches, connectors, relais or the like.

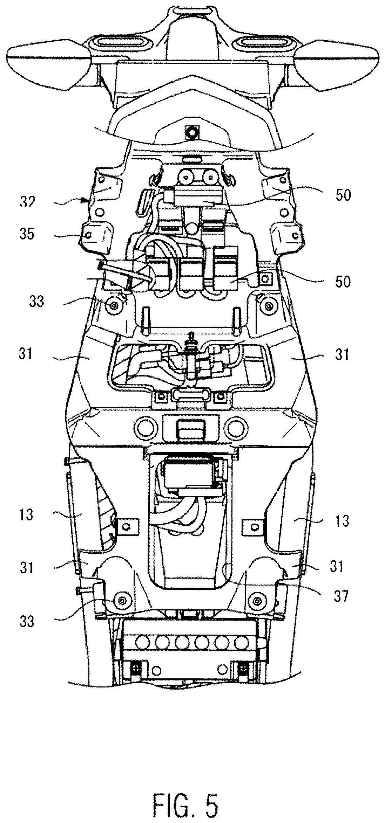

Those electrical components are attached to the resin support member directly or via a supporting element such as a screw, an engagement portion or adhesive material. Three engagement portions 34 formed as a latch-like protrusion are provided onto which an electrical component can be placed. An electrical component 50 is indicated with dotted lines in Fig. 36 as well as in solid lines in Fig. 5. The electrical components comprise corresponding receptacles for the protrusions. The receptacles are not shown. The electrical component is positioned such that it extends below and above the pipe sections in a side view. It is also possible to arrange the electrical component such that it extends only below or above the left and right pipe sections in a side view. But the arrangement according to the embodiment is to be preferred for the increased compactness of the straddle type vehicle.

The resin support member 30 is further provided with one or a plurality of openings 37. The electrical components 50 mounted on the resin support member 30 are connected with other member via cables which are to pass through the opening 37. The electrical components 50 may also be supported by the resin support member 30 so as to pass through the opening 37 by itself. The openings allow for more flexibility in receiving electrical components of different shapes and sizes. They furthermore reduce the weight of the resin support member 30.

According to the preferred embodiment, the resin support member 30 has flange portions 32 which are protruding in the width direction further beyond the left and right pipe section 12, 13, at the area substantially where the secondary seat 16 is located. Those flange portions 32 constitute grip portions 40 for pillion rider together with resin body cover 45. The resin body cover 45 constitutes of three sections 45a, 45b and 45c which are screwed to the left and right pipe sections as well as the resin support member 30 by screws 45d and corresponding support plates 45e in a commonly known manner. Section 45a of the resin body cover is connected to the flange portions of the resin support member 30 by screws 45d and support plates 45e. In addition section 45a of the resin body cover is fixed to the other two sections 45b and 45c and is thereby also connected to the left and right pipe sections 12 and 13. The resin support member 30 is thereby secured to rear body frame 2b and to the resin body cover 30. Furthermore the secondary seat is fixed to the first section 45a of the resin body cover by screws 45d an d support plates 45e.

The resin support member 30 is further provided with plurality of second fixing portions 35 on each of the left and right edge portion of the resin support member 30. They receive secondary screws 35a. The screws 35a in the second fixing portions are adjusters or can be designed as dampers.

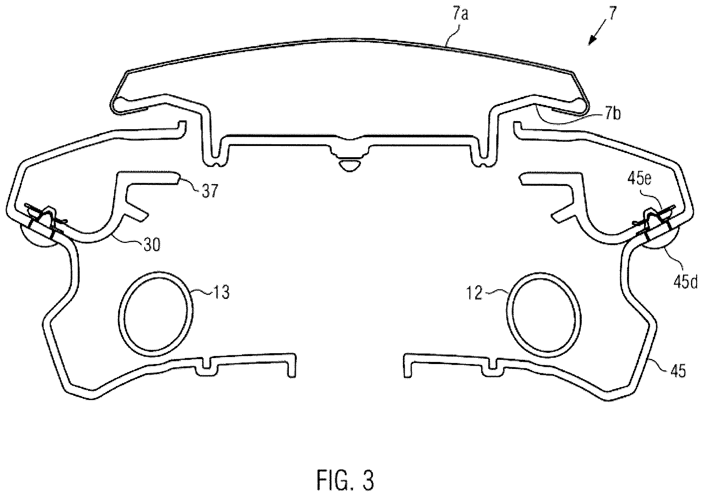

As can be seen in Fig. 3 the flange portion extends into the resin body cover 45. By extending into the resin body cover the resin support member support creates together with the resin cover body a grip portion for the pillion rider. The resin support member provides sufficient strength whereas the resin cover body can be molded into a desired shape for forming the grip portion. The resin cover body can be provided with designs or different colours and is made of a different material other than the resin support member 30.

The resin of the resin support member 30 is selected from a thermoplastic material that has an enhanced rigidity property, for example PVC (Polyvinylchloride). On the other hand, the resin of the resin body cover 45 is selected from a thermoplastic material that has an enhanced workability and light weight property, for example, PA (Polyamid) or ABS. The bending stiffness of PVC is about 2 to 3 three times the bending strength of PA, in particular PA6 and PA66.

The resin support member also provides an engagement portion 60 to lock the seat in its position. Furthermore, below the resin support member 30 and between the left and right pipe members 12 an 13, a bridge 70 is provided. The bridge 70 may form an additional stiffening element is however not needed in the preferred embodiment. It extends partially below the left and right pipe sections.

The resin support member according to the invention allows the efficient use of space for electrical components to be mounted in straddle type vehicles such as motorbikes quads, skidoos or the like. Furthermore, the shape of the resin support member allows to provide a load carrying element that provides increased stiffness to the body frame of the straddle type vehicle. It furthermore allows for flexibility in production and allows preassembling of the electrical component on the resin support member and then mounting the resin support member with the electrical component to the body frame. Furthermore, the resin support member my also act as an enforcement member for the grip portion for the pillion rider.

### List of the reference signs:

- 1:: motorcycle (straddle-type vehicle)
- 2:: body frame
- 2a:: front frame
- 2b:: rear frame
- 3:: front fork
- 4:: front wheel
- 5:: Steering handlebar
- 6.: Power unit (Engine)
- 7:: seat
- 7a:: cushion element
- 7b:: bottom plate
- 8:: seat main portion
- 10:: vehicle frame
- 12:: left pipe section
- 13:: right pipe section
- 16:: secondary seat portion
- 19:: trailing suspension arm
- 20:: rear wheel
- 21:: fuel tank
- 22:: front fork
- 24:: head type
- 30:: resin support member
- 31:: supporting portion
- 32:: flange portion
- 33:: first fixing portion
- 34:: engagement portion
- 35:: second fixing portion
- 35a:: secondary screw
- 36:: damper member
- 37:: opening portion
- 40:: grip portion
- 45:: resin body cover
- 45d:: screws
- 45e:: support plates
- 50:: electrical component
- 60:: engagement portion
- 70:: bridge

## Claims

1. Straddle-type vehicle (1), comprising:
a body frame (2) comprising a left pipe section (12) and a right pipe section (13);
a seat (7) comprising a bottom plate (7b) and a cushion element (7a) provided on the bottom plate (7b), wherein the seat (7) overlaps at least a portion of the left pipe section (12) and at least a portion of the right pipe section (13) in plan view;
a power unit/*engine* (6) rigidly fixed to the body frame (2) such that the power unit/*engine* cannot rotate with respect to the body frame (2);
a plurality of electrical components (50);
a resin support member (30) connecting the left pipe section (12) and the right pipe section (13) comprising at least one opening portion (37) provided between the left pipe section (12) and the right pipe section (13),, wherein
the seat (7) overlaps at least a portion of the resin support member (30) in plan view; and
at least one of the electrical components (50) is supported on the resin support member (30),
**characterized in that**
the at least one of the electrical components (50) overlaps the opening portion (37) when seen in plan view, and
a cable that electrically connects the at least one of the electrical components (50) with a component provided below the resin support member (30) is disposed so as to pass through the opening portion (37).

2. The straddle-type vehicle (1) according to claim 1, wherein the resin support member (30) comprises at least one supporting portion (31) overlaps the left pipe section (12) and the right pipe section (13) in plan view, and contacts with the left pipe section (12) and the right pipe section (13).

3. The straddle-type vehicle (1) according to claim 1 or 2, wherein at least a portion of the at least one electrical component (50) overlaps the left pipe section (12) and/or the right pipe section (13) in side view.

4. The straddle-type vehicle (1) according to any one of claims 1 to 3, wherein the at least one of the electrical components (50) is attached directly to the resin support member (30).

5. The straddle-type vehicle (1) according to any one of claims 1 to 4, wherein the resin support member (30) comprises at least one first fixing portion (33) configured to fix the resin support member (30) to the left pipe section (12) and/or to the right pipe section (13).

6. The straddle-type vehicle (1) according to any of the claims 1 to 5, wherein the resin support member (30) further comprises at least one supporting portion (31) positioned at a distance from the at least one first fixing portion (33) in the longitudinal direction of the vehicle.

7. The straddle-type vehicle (1) according to any of the claims 2 to 6, wherein the at least one supporting portion (31) is configured to support the resin support member (30) on the left pipe section (12) and/or on the right pipe section (13).

8. The straddle-type vehicle (1) according to any one of claims 1 to 7, wherein at least a portion of the at least one electrical component (50) is positioned above an upper edge of the resin support member (30) when seen in a side view.

9. The straddle-type vehicle (1) according to any one of claims 1 to 8, wherein at least a portion of the at least one electrical component (50) is positioned below a lower edge of the resin support member (30) when seen in a side view.

10. The straddle-type vehicle (1) according to any one of claims 1 to 9, wherein the resin of the resin support member (30) is a thermosetting resin, preferably PVC.

11. The straddle-type vehicle (1) according to any one of claims 1 to 10, said straddle-type vehicle (1) further comprising a resin body cover (45), wherein the resin of the resin body cover (45) is of a different material to the resin of the resin support member (30).

12. The straddle-type vehicle (1) according to claim 11, wherein the resin support member (30) comprises at least one second fixing portion (35) configured to fix the resin support member (30) to the resin body cover (45).

13. The straddle-type vehicle (1) according to claim 11 or 12, wherein the resin support member (30) and the resin body cover (45) are configured so as to form a grip portion (40) for a pillion passenger, and a damper member (35a) is provided between the resin support member (30) and the resin body cover (45).

14. The straddle-type vehicle (1) according to any one of claims 11 to 13, wherein the resin of the resin body cover (45) is a thermoplastic resin, preferably PA or ABS.

## Patentansprüche

1. Spreizsitz-Fahrzeug (1), das umfasst:
einen Karosserierahmen (2), der einen linken Rohr-Teilabschnitt (12) und einen rechten Rohr-Teilabschnitt (13) umfasst;
einen Sitz (7), der eine untere Platte (7b) und ein Polster-Element (7a) umfasst, dass sich auf der unteren Platte (7b) befindet, wobei der Sitz (7), in Draufsicht, wenigstens einen Abschnitt des linken Rohr-Teilabschnitts (12) und wenigstens einen Abschnitt des rechten Rohr-Teilabschnitts (13) überlappt;
eine/n Kraft-Einheit/Motor (6), die/der starr so an dem Karosserierahmen (2) befestigt ist, dass sich die/der Kraft-Einheit/Motor in Bezug auf den Karosserierahmen (2) nicht drehen kann;
eine Vielzahl elektrischer Komponenten (50);
ein Kunststoff-Trageteil (30), das den linken Rohr-Teilabschnitt (12) und den rechten Rohr-Teilabschnitt (13) verbindet und wenigstens einen Öffnungs-Abschnitt (37) umfasst, der sich zwischen dem linken Rohr-Teilabschnitt (12) und dem rechten Rohr-Teilabschnitt (13) befindet, wobei
der Sitz (7), in Draufsicht, wenigstens einen Abschnitt des Kunststoff-Trageteils (30) überlappt; und
wenigstens eine der elektrischen Komponenten (50) von dem Kunststoff-Trageteil (30) getragen wird,
**dadurch gekennzeichnet, dass**
die wenigstens eine der elektrischen Komponenten (50), in Draufsicht gesehen, den Öffnungs-Abschnitt (37) überlappt, und
ein Kabel, das die wenigstens eine der elektrischen Komponenten (50) mit einer Komponente verbindet, die sich unterhalb des Kunststoff-Trageteils (30) befindet, so angeordnet ist, dass es durch den Öffnungs-Abschnitt (37) hindurch verläuft.

2. Spreizsitz-Fahrzeug (1) nach Anspruch 1, wobei das Kunststoff-Trageteil (30) wenigstens einen tragenden Abschnitt (31) umfasst, der, in Draufsicht, den linken Rohr-Teilabschnitt (12) und den rechten Rohr-Teilabschnitt (13) überlappt, und mit dem linken Rohr-Teilabschnitt (12) und dem rechten Rohr-Teilabschnitt (13) in Kontakt ist.

3. Spreizsitz-Fahrzeug (1) nach Anspruch 1 oder 2, wobei wenigstens ein Abschnitt der wenigstens einen elektrischen Komponente (50), in Seitenansicht, den linken Rohr-Teilabschnitt (12) und/oder den rechten Rohr-Teilabschnitt (13) überlappt.

4. Spreizsitz-Fahrzeug (1) nach einem der Ansprüche 1 bis 3, wobei die wenigstens eine der elektrischen Komponenten (50) direkt an dem Kunststoff-Trageteil (30) angebracht ist.

5. Spreizsitz-Fahrzeug (1) nach einem der Ansprüche 1 bis 4, wobei das Kunststoff-Trageteil (30) wenigstens einen ersten Befestigungs-Abschnitt (33) umfasst, der so eingerichtet ist, dass er das Kunststoff-Trageteil (30) an dem linken Rohr-Teilabschnitt (12) und/oder dem rechten Rohr-Teilabschnitt (13) befestigt.

6. Spreizsitz-Fahrzeug (1) nach einem der Ansprüche 1 bis 5, wobei das Kunststoff-Trageteil (30) des Weiteren wenigstens einen tragenden Abschnitt (31) umfasst, der in der Längsrichtung des Fahrzeugs in einem Abstand zu dem wenigstens einen ersten Befestigungs-Abschnitt (33) positioniert ist.

7. Spreizsitz-Fahrzeug (1) nach einem der Ansprüche 2 bis 6, wobei der wenigstens eine tragende Abschnitt (31) so eingerichtet ist, dass er das Kunststoff-Trageteil (30) an dem linken Rohr-Teilabschnitt (12) und/oder dem rechten Rohr-Teilabschnitt (13) trägt.

8. Spreizsitz-Fahrzeug (1) nach einem der Ansprüche 1 bis 7, wobei wenigstens ein Abschnitt der wenigstens einen elektrischen Komponente (50), in einer Seitenansicht gesehen, oberhalb eines oberen Randes des Kunststoff-Trageteils (30) positioniert ist.

9. Spreizsitz-Fahrzeug (1) nach einem der Ansprüche 1 bis 8, wobei wenigstens ein Abschnitt der wenigstens einen elektrischen Komponente (50), in einer Seitenansicht gesehen, unterhalb eines unteren Randes des Kunststoff-Trageteils (30) positioniert ist

10. Spreizsitz-Fahrzeug (1) nach einem der Ansprüche 1 bis 9, wobei der Kunststoff des Kunststoff-Trage Teils (30) ein hitzehärtbarer Kunststoff, vorzugsweise PVC, ist.

11. Spreizsitz-Fahrzeug (1) nach einem der Ansprüche 1 bis 10, wobei das Spreizsitz-Fahrzeug (1) des Weiteren eine Kunststoff-Karosserieverkleidung (45) umfasst und der Kunststoff der Kunststoff-Karosserieverkleidung (45) aus einem anderen Material besteht als der Kunststoff des Kunststoff-Trageteils (30).

12. Spreizsitz-Fahrzeug (1) nach Anspruch 11, wobei das Kunststoff-Trageteil (30) wenigstens einen zweiten Befestigungs-Abschnitt (35) umfasst, der so eingerichtet ist, dass er das Kunststoff-Trageteil (30) an der Kunststoff-Karosserieverkleidung (45) befestigt.

13. Spreizsitz-Fahrzeug (1) nach Anspruch 11 oder 12, wobei das Kunststoff-Trageteil (30) und die Kunststoff-Karosserieverkleidung (45) so eingerichtet sind, dass sie einen Griff-Abschnitt (40) für einen Sozius aufweisen, und ein Dämpfer-Element (35a) zwischen dem Kunststoff-Trageteil (30) und der Kunststoff-Karosserieverkleidung (45) vorhanden ist.

14. Spreizsitz-Fahrzeug (1) nach einem der Ansprüche 11bis 13, wobei der Kunststoff des Kunststoff-Trageteils (45) ein thermoplastischer Kunststoff, vorzugsweise PA oder ABS, ist.

## Revendications

1. Véhicule de type à enfourcher (1), comprenant :
un châssis de carrosserie (2) comprenant une section de tube gauche (12) et une section de tube droite (13) ;
un siège (7) comprenant une plaque inférieure (7b) et un élément formant coussin (7a) situé sur la plaque inférieure (7b), dans lequel le siège (7) recouvre au moins une partie de la section de tube gauche (12) et au moins une partie de la section de tube droite (13), en vue de dessus ;
un groupe moteur/moteur (6) fixé de manière rigide sur le châssis de carrosserie (2) de façon que le groupe moteur/*moteur* ne puisse pas tourner par rapport au châssis de carrosserie (2) ;
une pluralité de composants électriques (50) ;
un élément de support en résine (30) reliant la section de tube gauche (12) et la section de tube droite (13), comprenant au moins une partie formant ouverture (37) située entre la section de tube gauche (12) et la section de tube droite (13), dans lequel
le siège (7) recouvre au moins une partie de l'élément de support en résine (30), en vue de dessus ; et
au moins un des composants électriques (50) est supporté sur l'élément de support en résine (30),
**caractérisé en ce que**
l'au moins un des composants électriques (50) recouvre la partie formant ouverture (37), en vue de dessus, et
un câble qui connecte électriquement l'au moins un des composants électriques (50) à un composant situé en dessous de l'élément de support en résine (30) est disposé de manière à passer à travers la partie formant ouverture (37).

2. Véhicule de type à enfourcher (1) selon la revendication 1, dans lequel l'élément de support en résine (30) comprend au moins une partie de soutien (31) qui recouvre la section de tube gauche (12) et la section de tube droite (13), en vue de dessus, et qui est en contact avec la section de tube gauche (12) et la section de tube droite (13).

3. Véhicule de type à enfourcher (1) selon la revendication 1 ou 2, dans lequel au moins une partie de l'au moins un composant électrique (50) recouvre la section de tube gauche (12) et/ou la section de tube droite (13), en vue latérale.

4. Véhicule de type à enfourcher (1) selon l'une quelconque des revendications 1 à 3, dans lequel l'au moins un des composants électriques (50) est fixé directement sur l'élément de support en résine (30).

5. Véhicule de type à enfourcher (1) selon l'une quelconque des revendications 1 à 4, dans lequel l'élément de support en résine (30) comprend au moins une première partie de fixation (33) conçue pour fixer l'élément de support en résine (30) sur la section de tube gauche (12) et/ou sur la section de tube droite (13).

6. Véhicule de type à enfourcher (1) selon l'une quelconque des revendications 1 à 5, dans lequel l'élément de support en résine (30) comprend, en outre, au moins une partie de soutien (31) positionnée à une distance de l'au moins une première partie de fixation (33) dans la direction longitudinale du véhicule.

7. Véhicule de type à enfourcher (1) selon l'une quelconque des revendications 2 à 6, dans lequel l'au moins une partie de soutien (31) est conçue pour soutenir l'élément de support en résine (30) sur la section de tube gauche (12) et/ou sur la section de tube droite (13).

8. Véhicule de type à enfourcher (1) selon l'une quelconque des revendications 1 à 7, dans lequel au moins une partie de l'au moins un composant électrique (50) est positionnée au-dessus d'un bord supérieur de l'élément de support en résine (30), en vue latérale.

9. Véhicule de type à enfourcher (1) selon l'une quelconque des revendications 1 à 8, dans lequel au moins une partie de l'au moins un composant électrique (50) est positionnée au-dessous d'un bord inférieur de l'élément de support en résine (30), en vue latérale.

10. Véhicule de type à enfourcher (1) selon l'une quelconque des revendications 1 à 9, dans lequel la résine de l'élément de support en résine (30) est une résine thermodurcissable, de préférence du PVC.

11. Véhicule de type à enfourcher (1) selon l'une quelconque des revendications 1 à 10, ledit véhicule de type à enfourcher (1) comprenant, en outre, un capot de carrosserie en résine (45), dans lequel la résine du capot de carrosserie en résine (45) est faite d'un matériau différent de la résine de l'élément de support en résine (30).

12. Véhicule de type à enfourcher (1) selon la revendication 11, dans lequel l'élément de support en résine (30) comprend au moins une seconde partie de fixation (35) conçue pour fixer l'élément de support en résine (30) sur le capot de carrosserie en résine (45).

13. Véhicule de type à enfourcher (1) selon la revendication 11 ou 12, dans lequel l'élément de support en résine (30) et le capot de carrosserie en résine (45) sont conçus de manière à former une partie de préhension (40) pour un passager arrière, et un élément amortisseur (35a) est situé entre l'élément de support en résine (30) et le capot de carrosserie en résine (45).

14. Véhicule de type à enfourcher (1) selon l'une quelconque des revendications 11 à 13, dans lequel la résine du capot de carrosserie en résine (45) est une résine thermoplastique, de préférence de la PA ou de l'ABS.
